# EUROPÄISCHE PATENTSCHRIFT

(11) **EP 2 301 316 B1**
(45) Veröffentlichungstag und Bekanntmachung des Hinweises auf die Patenterteilung: **02.10.2013**
(21) Anmeldenummer: 10401145.7
(22) Anmeldetag: 18.08.2010
(51) Int. Cl.: A01C 17/00

(54) **Zweischeibenstreuer mit einstellbarem Streubild**
Two-disk caster with variable distribution pattern
Epandeur double disque à dispersion variable

(30) Priorität: 25.09.2009 DE 102009044108
(43) Veröffentlichungstag der Anmeldung: 30.03.2011
(73) Patentinhaber: Amazonen-Werke H. Dreyer GmbH & Co. KG, 49205 Hasbergen (DE)
(72) Erfinder: Johannaber, Stefan Jan, 49536 Lienen (DE); Scheufler, Bernd, 49205 Hasbergen (DE)

(56) Entgegenhaltungen:
- EP-A1- 0 495 237
- DE-A1- 19 902 552
- DE-A1-102007 045 905

## Beschreibung

Die Erfindung betrifft einen Zweischeibenstreuer gemäß des Oberbegriffes des Patentanspruches 1.

Ein derartiger Zweischeibenstreuer ist beispielsweise durch die EP 0 337 069 A1 bekannt. Bei diesem Zweischeibenstreuer ist in jeder den Trichter nach unten verschließenden Bodenplatte eine Dosieröffnung angeordnet. Jeder Dosieröffnung ist ein erster Schieber zugeordnet, mittels welchem der freie Querschnitt der Dosieröffnung einstellbar ist. Hierüber wird die Ausbringmenge bestimmt. Weiterhin ist jeder Dosieröffnung ein zweiter Schieber zugeordnet, mittels welchem der freie Querschnitt der Dosieröffnung gegenüber der von dem ersten Schieber freigegebene Querschnitt veränderbar ist, so dass eine Mehr- oder Mindermenge eingestellt werden kann. Hierbei wird die Streubildcharakteristik nicht verändert, sondern es wird lediglich eine Veränderung der Ausbringmenge erreicht.

Durch die EP 0 330 839 B1 ist ein weiterer Zweischeibenstreuer bekannt. Bei diesem Zweischeibenstreuer ist das Dosierorgan als motorisch angetriebene Dosierwalze ausgebildet. Unterhalb der Dosierwalze ist eine Trichterrutsche angeordnet. Diese Trichterrutsche ist verstellbar gegenüber dem Dosierorgan und der Schleuderscheibe angeordnet, so dass der Aufgabepunkt des von dem Dosierorgan dosierten Materiales gegenüber der Schleuderscheibe verlagerbar ist. Hierdurch kann die Maschine von Normal- auf einseitiges oder doppelseitiges Grenzstreuen eingestellt werden. Zusätzlich sind die Verteilerscheiben mittels einer in seiner Drehzahl stufenlos veränderbaren Antriebsvorrichtung anzutreiben, so dass die Drehzahl der Verteilerscheiben einstellbar ist.

Ein weiterer Zweischeibenstreuer ist durch die EP 0 613 693 A1 bekannt. Unterhalb der Dosieröffnung sind Leitflächen zur Veränderung der Aufgabefläche des Düngers auf die Schleuderscheiben angeordnet, um so den Streuer auf Normal- und Grenzstreuen einstellen zu können.

Die EP 0 495 237 A1 zeigt einen Zweischeibenstreuer, bei dem durch den Dosierschieber der freigegebene Querschnitt der Dosieröffnung in veränderbarer Weise durch einen Schieber einstellbar ist.

Die DE 10 2007 045 905 A1 zeigt eine Dosiervorrichtung für einen Scheibenstreuer, bei welchem die Kontur der Dosieröffnung der Dosiervorrichtung durch einen oder mehrere Schieber einstellbar ist, so dass verschiedene und/oder verschiedenartige Öffnungskonturen für die Dosieröffnung einstellbar sind."

Sämtliche bekannten Düngerstreuer, die für das Grenzstreuen eingestellt werden sollen, weisen Vorrichtungen auf, die eine beträchtliche Höhe aufweisen, so dass sich ein großer Abstand zwischen Dosieröffnung und Oberkante der auf den Verteilerscheiben angeordneten Wurfschaufeln ergibt. Darüber hinaus sind schräge Flächen, über welche der Dünger von der Dosieröffnung zu den Wurfflügeln geleitet wird, gefährdet, dass sich auf ihnen insbesondere feuchter oder hygroskopischer Dünger anlagert, so dass es zu unerwünschten Veränderungen der Aufgabefläche oder das Aufgabepunktes des Düngers auf die Schleuderscheiben kommt. Hierdurch ergibt sich eine unerwünschte Veränderung der Streugutverteilung.

Der Erfindung liegt die Aufgabe zugrunde, eine einfach ausgestaltete Vorrichtung zur Einstellung und Veränderung der

Streubildcharakteristik im Randbereich des von dem von den Wurfschaufeln abgeschleuderten Materialpartikeln erzeugten Streubildes zu schaffen. Insbesondere soll der Streuer in einfacher Weise von Normal- auf Grenz- oder Randstreuen eingestellt werden können.

Diese Aufgabe wird erfindungsgemäß durch die kennzeichnenden Merkmale des Anspruches 1 gelöst. Infolge dieser Maßnahmen lässt sich durch die Veränderung der Öffnungskontur, auch bei gleichbleibender Ausbringmenge eine Veränderung der Streuflanke im Rahmenbereich der Querverteilung dargestellten Streubildes erreichen. Hierdurch lassen sich steile oder flachere Streuflanken im Randbereich des Streubildes einstellen. Durch die Veränderung der Kontur der Dosieröffnungen durch den weiteren Schieber wird also unmittelbar in die Aufgabecharakteristik und die Lage und Form der Aufgabefläche bzw. des Aufgabepunktes auf der Schleuderscheibe ohne zusätzliche Zwischenleitelemente eingegriffen. So werden keine Materialpartikel in der Weise den Wurfflügeln bzw. der Verteilerscheibe zugeführt, dass bei Erzeugung eines Grenz- oder Randstreubildes Materialpartikel in einen unerwünschten Bereich abgeworfen werden bzw. bei Erzeugung eines Normalstreubildes Materialpartikel der Schleuderscheibe und den Wurfflügeln in der Weise zugeführt werden, dass sie das Material mit einer entsprechenden Wurfweite zur Erzeugung eines dreieckförmigen Streubildes abschleudern können. Durch den unmittelbaren Eingriff in die Konturen der Dosieröffnung und hiermit die Einflussnahme auf die Streubildcharakteristik, ohne dass eine Ausbringmengenänderung zwangsweise erfolgen muss, wird eine äußerst einfache und kompakt bauende Vorrichtung zur Einstellung der Streubildcharakteristik und deren Veränderung in überraschend einfacher Weise geschaffen. Dieser weitere Schieber kann in einem sehr engen Abstand zwischen Oberkante der Wurfflügel und der Unterkante der Dosierplatte bzw. den Bauteilen, in denen sich die Dosieröffnung befindet, angeordnet werden.

Darüber hinaus wird eine einfache Anordnung von Dosierschieber und des weiteren Schiebers an dem Vorratsbehälter oder der Bodenplatte, in dem sich die Dosieröffnung befindet dadurch erreicht, dass der Dosierschieber und der weitere Schieber auf einem gemeinsamen Bolzen gelagert sind.

Um in einfacher Weise die Dosieröffnung und die Ausbringmenge erforderlichen falls je nach vorliegenden Ausbringbedingungen leicht und einfach anpassen zu können, ist vorgesehen, dass die Kontur der Dosieröffnung durch den weiteren Schieber mit oder ohne Änderung der Querschnittsgröße der Dosieröffnung veränderbar ist.

Bei manchen Streugutarten und bei manchen Arbeitsbreiten ist zur Erzeugung des gewünschten Streubildes mit der entsprechenden Randcharakteristik der Streugutverteilung vorteilhaft, dass die Dosieröffnung gegenüber der Verteilerscheibe verlagerbar am Vorratsbehälter angeordnet ist, wobei eine vorzugsweise motorisch ausgebildete Stellvorrichtung zur Verlagerung der Dosieröffnung vorgesehen ist.

Um in einfacher Weise die einzelnen Einstellparameter zur Erzeugung eines Streubildes mit der entsprechend den

Einsatzbedingungen gewünschten Streubildcharakteristik, wie Normalstreuen, Grenzstreuen, Randstreuen automatisch einstellen und verändern zu können, ist vorgesehen, dass der weitere Dosierschieber mittels eines vorzugsweise motorisch ausgebildeten Stellelementes verstellbar ist, dass die drehzahlveränderbare Antriebseinrichtung mittels eines motorischen Stellelementes zur Drehzahlveränderung einstellbar ist, dass ein Bordcomputer vorgesehen ist, dass über den Bordcomputer die Stellvorrichtungen der veränderbaren Antriebseinrichtung, zur Verlagerung der Dosieröffnung und/oder des weiteren Schiebers mit Einstelldaten beaufschlagbar sind und dass die Einstellungen des weiteren Schiebers von der Antriebseinrichtung entsprechend eines im Bordcomputer hinterlegten Programms erfolgt.

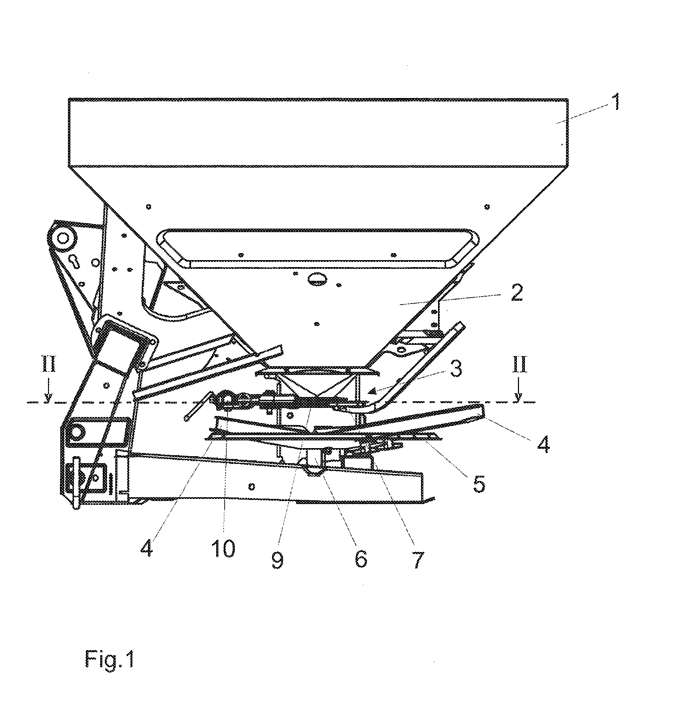

Weitere Einzelheiten der Erfindung sind der Beispielsbeschreibung und den Zeichnungen zu entnehmen. Hierbei zeigen
- Fig. 1: den Schleuderstreuer in der Ansicht von hinten und in Prinzipdarstellung,
- Fig. 2: die aus Dosieröffnung, Dosierschieber und weiterem Schieber bestehende Dosiereinrichtung für die in Fahrtrichtung gesehen linke Schleuderscheibe des Zweischeibenstreuers
- Fig. 3: die Einstellung eines kleinen freigegebenen Querschnittes der Dosieröffnung, wobei durch den Dosierschieber zwei Teilbereiche im Anfangsbereich der Dosieröffnung freigegebenen sind, gemäß Fig. 2 in der Ansicht II - II,
- Fig. 4: eine weitere Einstellung eines größeren freigegebenen Querschnittes der Dosieröffnung, wobei eine mittlere Ausbringmenge eingestellt ist und der der Schleuderscheibe zugewandte Anfangsbereich durch den Dosierschieber wieder verschlossen ist, gemäß Fig. 2 in der Ansicht II - II,
- Fig. 5: die Einstellung des Dosierschiebers gemäß Fig. 4, wobei der weitere Schieber in dem Bereich der Dosieröffnung eingeschwenkt ist und hierdurch die Kontur der Dosieröffnung verändert,
- Fig. 6: die Einstellung des Dosierschiebers gemäß Fig. 4, wobei der weitere Schieber in dem Bereich der Dosieröffnung weiter eingeschwenkt als in Fig. 5 ist

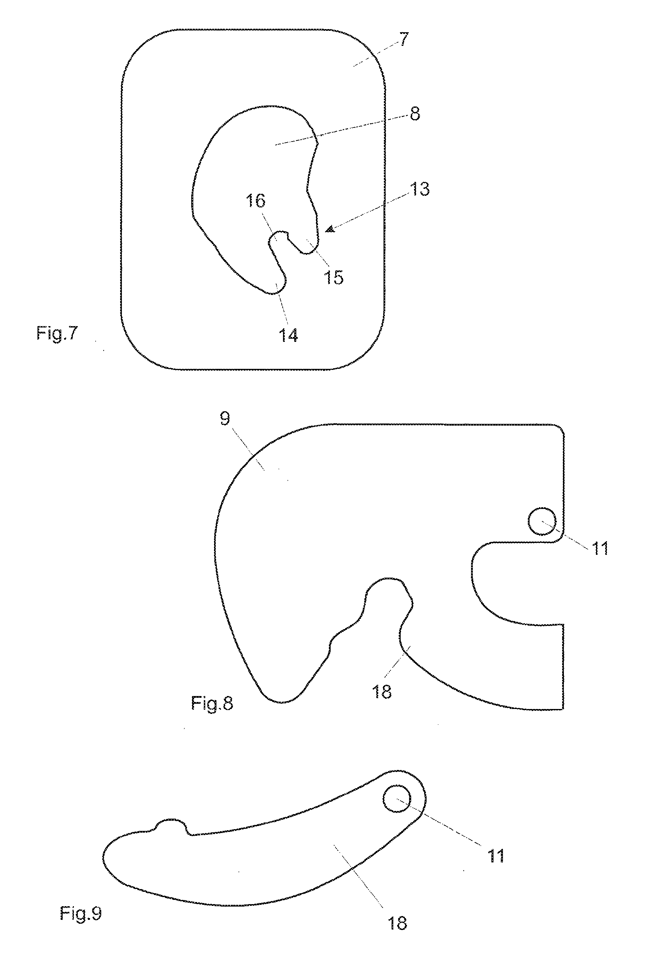

- Fig. 7: und hierdurch die Kontur der Dosieröffnung entsprechend verändert, die Dosierplatte mit Dosieröffnung ohne Dosierschieber und weiteren Schiebern in der Ansicht II - II,
- Fig. 8: den Dosierschieber in der Ansicht II - II,
- Fig. 9: den weiteren Schieber in der Ansicht II - II,
- Fig. 10: die aus Dosieröffnung und Dosierschieber bestehende Dosiereinrichtung für die in Fahrtrichtung gesehen linke Schleuderscheibe des Zweischeibenstreuers, gemäß Fig. 2 wobei jedoch die Dosierplatte mit der Auslauföffnung gegenüber dem Vorratsbehälter und der Streuscheibe gegenüber der Einstellung in Fig. 2 verdreht zur Veränderung der Aufgabefläche auf die Schleuderscheibe ist,
- Fig. 11: die Darstellung der von dem Schleuderstreuer abgeworfenen äußersten Wurfpartikel mit dem hierbei erzeugten dreieckförmigen Normalstreubild in Prinzipdarstellung,
- Fig. 12: das gemäß der Einstellung des Dosierorgans nach Fig. 5 erzeugte Streubild mit den Wurfbahnen der äußersten Streupartikel in Prinzipdarstellung,
- Fig. 13: das gemäß der Einstellung nach dem Dosierorgan nach Fig. 5 erzeugte Streubild mit den Wurfbahnen der äußersten Streupartikel in Prinzipdarstellung, mit zusätzlicher Drehzahlvariation,
- Fig. 14: das gemäß der Einstellung nach dem Dosierorgan nach Fig. 6 erzeugte Streubild mit den Wurfbahnen der äußersten Streupartikel in Prinzipdarstellung und
- Fig. 15: das gemäß der Einstellung nach dem Dosierorgan nach Fig. 6 erzeugte Streubild mit den Wurfbahnen der äußersten Streupartikel in Prinzipdarstellung, mit zusätzlicher Drehzahlvariation.

Der Zweischeibenstreuer zur Ausbringung von Streugut, insbesondere Mineraldünger in der Landwirtschaft weist den Vorratsbehälter 1 auf, der zwei sich trichterförmig nach unten verjüngende Auslauftrichter 2 aufweist. Die Auslauftrichter 2 sind jeweils durch eine Dosiereinrichtung 3 abgeschlossen. Unterhalb der Dosiereinrichtung 3 ist jeweils ein mittels eines motorischen Antriebes rotierend angetriebene und mit Wurfflügeln 4 besetzte Verteilerscheibe 5 auf der Antriebswelle 6 angeordnet. In dem unteren Bereich je des Auslauftrichters 2 oberhalb der Dosiereinrichtung 3 befindet sich eine nicht dargestellte Rühreinrichtung.

Die Dosiereinrichtung 3 weist jeweils eine Dosierplatte 7 mit einer Dosieröffnung 8 und einem zugeordneten Dosierschieber 9 zum Verschließen der Dosieröffnung 8 und zum Einstellen der Öffnungsweite der Dosieröffnung 8 auf. Der Dosierschieber 9 ist mittels einer ihm zuordneten motorischen Stelleinrichtung 10 um die Gelenkachse des Gelenkbolzens 11, mit dem Dosierschieber 9 an der Dosiervorrichtung 3 befestigt ist, in die jeweils gewünschte Position zu verstellen. Die Dosierplatte 7 kann in nicht dargestellter Weise an dem Auslauftrichter 2 in festgesetzter oder in verstellbarer Weise zur Verlagerung der Dosieröffnung 8 gegenüber der Verteilerscheibe 5 und der Antriebswelle 6 der Schleuderscheibe 5 verstellbar angeordnet sein.

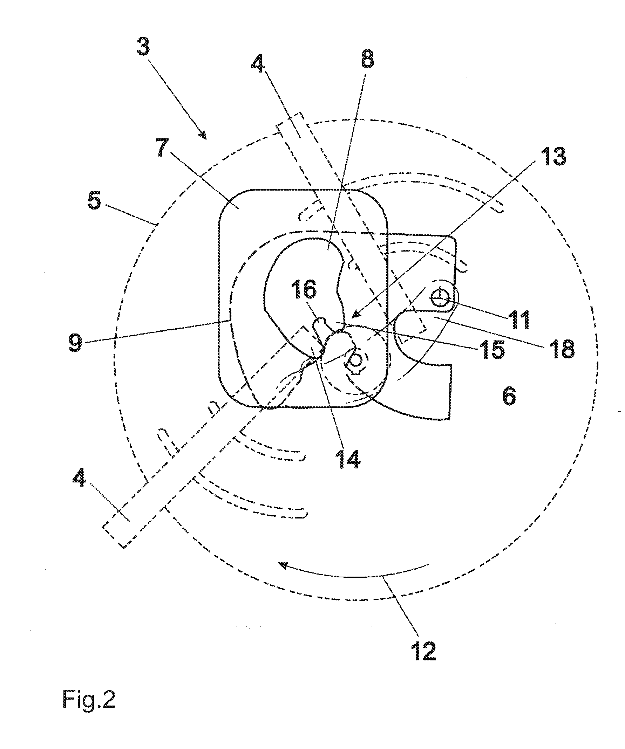

Die Antriebswelle 6 der Schleuderscheibe 5 ist in den Fig. 2 bis 5 durch die kreisförmige Darstellung dargestellt. In Fig. 2 ist die Verteilerscheibe 5 mit den Wurfschaufeln 4 unterhalb der Dosiereinrichtung 3 mit unterbrochenen Strichen dargestellt. In den Fig. 2 bis 5 ist jeweils die Dosiereinrichtung 3, die der in Fahrtrichtung gesehen linken Schleuderscheibe 5 zugeordnet ist, dargestellt. Die Schleuderscheibe 5 wird in Drehrichtung, wie durch den Pfeil 12 gekennzeichnet ist, angetrieben.

Die Dosieröffnung 8 erstreckt sich von der Drehachse 6 der Schleuderscheibe 5 aus gesehen in sich radial nach außen erweiternder Weise. Der Öffnungsbereich 13 der Dosieröffnung 8 befindet sich in dem der Schleuderscheibenachse 6 benachbarten Bereich. Im Öffnungsbereich 13 weist die Dosieröffnung 8 zwei beabstandet zueinander angeordnete Öffnungsabschnitte 14 und 15 auf, welche durch ein von der Schleuderscheibenachse 6 aus gesehen etwa radial sich erstreckenden plattenförmigen Steg 16 der Dosierplatte 7 voneinander getrennt sind. Im Anfangsbereich 13 ist der frei gegebenen Öffnungsbereich der Dosieröffnung 8 also geteilt ausgebildet.

Unterhalb der Dosierplatte 7 ist der vorerwähnte Dosierschieber 9 zur Verschließung der Dosieröffnung 8 und zum Einstellen dessen jeweils gewünschter Öffnungsweite angeordnet.

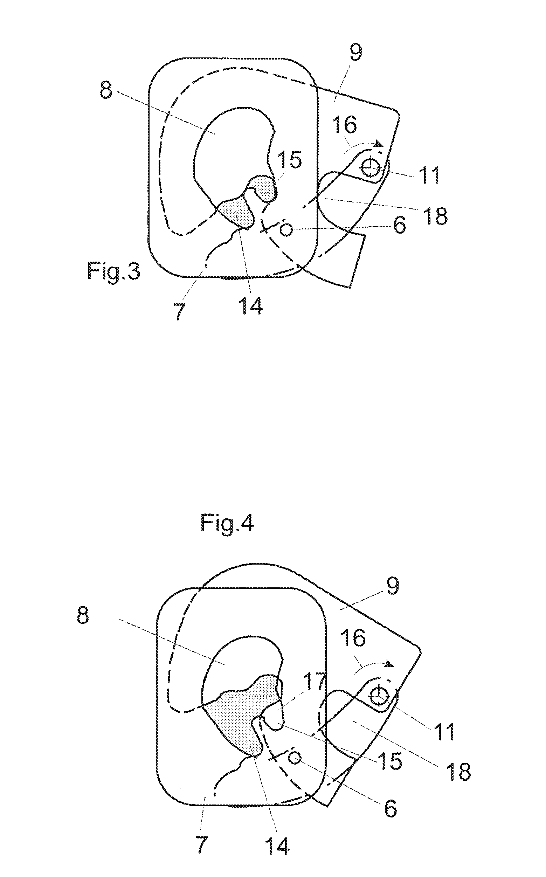

Der Dosierschieber 9 ist im Zusammenwirken mit der Dosieröffnung 8 derart ausgestaltet, dass bei einem kleinen Massenstrom mit einer Öffnungsfläche von bis zu 10% bis zu 25%, vorzugsweise etwa 18,5% der Dosieröffnung 8 die gesamte in Drehrichtung 12 der Wurfflügel 4 sich erstreckende Breite der Dosieröffnung 8 im Öffnungsbereich 13 der Dosieröffnung 8 von dem Dosierschieber 8 freigegeben wird, wie in Fig. 3 durch die schattierten Bereiche dargestellt ist.

Bei einem weiteren Öffnen der Dosieröffnung 8 durch den Dosierschieber 9, in dem der Dosierschieber 9 in Pfeilrichtung 16 verschwenkt wird, wird ab einer Öffnungsfläche von mindestens 10% bis zu 25%, vorzugsweise etwa 18,5% der Dosieröffnung 8 ein Teilbereich 17 der Dosieröffnung 8 im Bereich dessen Öffnungsbeginnes 13 durch den Dosierschieber 9 wieder verschlossen, wie in Fig. 4 dargestellt ist. Hierbei liegt der im Öffnungsbeginn 13 der Dosieröffnung 8 wieder verschlossene Teilbereich 17 in dem der Drehrichtung 12 der Wurfflügel 4 abgewandten Bereich der Dosieröffnung 8, wie in Zusammenschau mit den Fig. 3 und 4 zu erkennen ist. Die wieder verschlossene Breite der Dosieröffnung 8 beträgt mindestens ¼ bis ⅓ der jeweiligen Breite der Dosieröffnung 8, wie die Fig. 4 zeigt. Der die Dosieröffnung 8 wieder verschließende Teil 18 des Dosierschiebers 9, der en Teilbereich 17 verschließt, ist plattenförmig ausgestaltet und Teil des Dosierschiebers 9. Der jeweils geöffnete Bereich der Dosieröffnung 8 ist jeweils schattiert dargestellt.

Durch das teilweise wiederverschließen der Dosieröffnung 8 in dem der Wurfschaufel 4 abgewandten Bereich wird bei größeren Mengen der Mengeneffekt minimiert bzw. eliminiert, so dass bei gleicher Einstellung des Dosier- 3 und Verteilsystems 4, 5eine gleichmäßige Düngerverteilung über den gewünschten Arbeitbereich bei unterschiedlich großen ausgebrachten Mengen erreicht wird.

Die Dosiervorrichtung 3 weist einen weiteren Schieber 18 auf. Dieser Schieber 18 ist der Dosieröffnung 8 ebenfalls zugeordnet. Der Schieber 9 und der weitere Schieber 18 sind auf dem gemeinsamen Schwenkbolzen 11 gelagert. Mittels des weiteren Schiebers 18 lässt sich der Verlauf der Kontur der Dosieröffnung 8 verändern. Durch die Verstellung des weiteren Schiebers 18 ist der Verlauf der Kontur der Dosieröffnung 8 veränderbar und zwar derart, dass durch eine zumindest teilweise Veränderung der Kontur der Dosieröffnung 8 die Wurfweite der von den Wurfflügeln 4 abgeschleuderten Materialpartikel verringert und gleichzeitig die Querverteilung der Materialpartikel einseitig im äußeren Randbereich des Streubildes verändert wird, so dass eine steilere Streuflanke entsteht. Dies wird weiter unten noch näher erläutert.

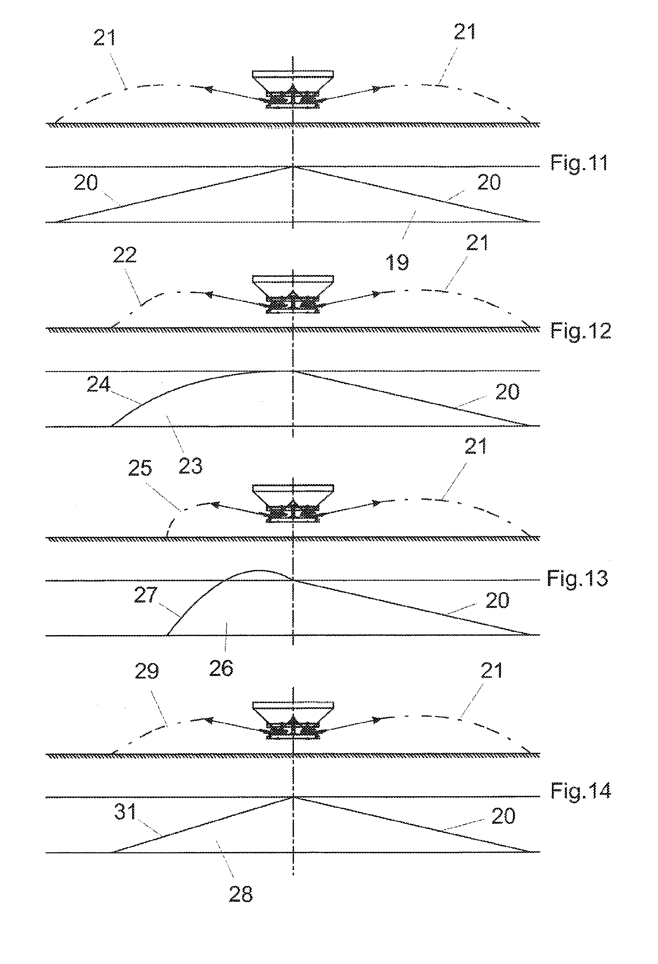

In der Darstellung nach Fig. 3 und 4 befindet sich der Schieber 18 in einer Position, in welcher er nicht in den Konturenverlauf der Dosieröffnung 8, wie sie durch den Ausschnitt in der Dosierplatte 7, welche den unteren trichterförmigen Bereich des Vorratsbehälters 1 abschließt als Aussparung angeordnet ist. Wenn der Dosierschieber 9 und der weitere Schieber 18 entsprechend den Fig. 3 bzw. 4 eingestellt ist, lässt sich das in Fig. 11 dargestellte dreieckförmige Grenzstreubild 19 mit den flach abfallenden Streuflanken 20, die zu beiden Seiten gleich abfallen, erzeugen. Hierbei werden die Materialpartikel entsprechend der oberen Darstellung in Fig. 11 abgeworfen, wobei in Prinzipstellung die Wurfbahn 21 der am weitesten fliegenden Düngerkörner dargestellt ist.

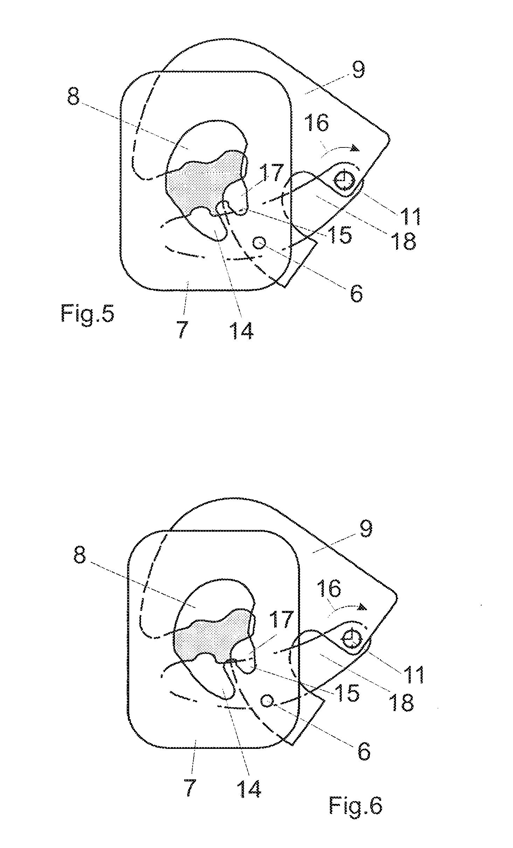

Um das in Fig. 12 dargestellte Randstreubild mit der steiler abfallenden Streuflanke zu erzeugen, wird der weitere Schieber 18 entsprechend Fig. 5 verschwenkt, so dass die Kontur der Dosieröffnung 9 in ihrem Öffnungsbeginnbereich 13, der durch den Schieber 9 freigegeben ist, verändert. Hierbei ist der weitere Schieber 18 ausgehend vom Öffnungbeginnbereich 13 in durch den Dosierschieber 9 den vom Dosierschieber 9 freigegebenen Querschnitt der Dosieröffnung 8 in zunehmend verändernder und abdeckender Weise ausgebildet in dem Bereich 13 der Dosieröffnung 8 eingeschwenkt und verändert somit die Kontur der Dosieröffnung. Die an sich in den linken äußeren Bereich am weitesten geworfenen Partikel entsprechend der Wurfbahn 22 werden den Wurfflügeln 4 bzw. der Verteilerscheibe 5 nicht zugeführt, so dass das in Fig. 12 in Prinzipdarstellung dargestellte Streubild 23 mit der verändernden linken steileren Streuflanke 24 gegenüber Fig. 12 entsteht.

Um noch eine weitere Reduzierung der Wurfweite entsprechend der Wurfbahn 25 ein Streubild 26 mit einer noch steileren Streuflanke 27 zu erreichen, wird die Drehzahl der in Fahrtrichtung gesehen linken Schleuderscheibe reduziert, so dass das in Fig. 13 dargestellte Streubild entsteht.

Wenn der Schieber 18 gemäß Fig. 5 zur Veränderung der Kontur der Dosieröffnung 8 in die in Fig. 5 dargestellte Position verschwenkt wird, wird gleichzeitig der Schieber 9 gegenüber der Einstellung gemäß Fig. 4 verschwenkt, um den freigegebenen Querschnitt und damit die Ausbringmenge konstant zu halten.

Somit ist also die Kontur der Dosieröffnung durch den weiteren Schieber 18 ohne Änderung der Querschnittsgröße der Dosieröffnung 9 veränderbar.

Der von dem weiteren Schieber 18 veränderte oder verschlossene Bereich der Kontur und/oder des Querschnitts der Dosieröffnung 9 liegt im Bereich des Öffnungsbeginns 13 der Dosieröffnung 9 und dem in Drehrichtung 12 der Wurfflügel 4 im hinteren Bereich der Dosieröffnung 9 wie Fig. 5 zeigt.

Sowohl der Dosierschieber 9 wie auch der weitere Schieber 18 sind über nicht dargestellte als motorisch ausgebildete Stellvorrichtungen, beispielsweise Elektroaktoren verstellbar.

Um eine automatische Einstellung der Kontur der Dosieröffnung 9 und des freigegebenen Öffnungsquerschnittes durch den Schieber 18 bzw. den Dosierschieber 9 zu erreichen, ist ein nicht dargestellter Bordcomputer vorgesehen. Über den Bordcomputer sind die Stellvorrichtungen der Schieber 9 und 18 mit entsprechenden Einstelldaten zu beaufschlagen, so dass die Einstellung des weiteren Schiebers 18 von der entsprechend des im Bordcomputer hinterlegten Programms erfolgen kann.

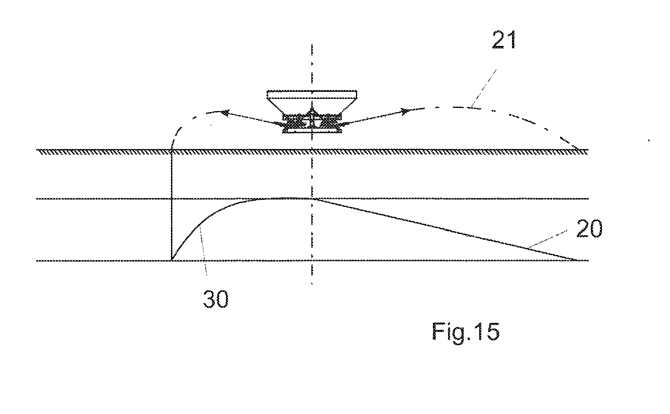

Gemäß Fig. 6 wird bei dem Einschwenken des weiteren Schiebers 18 in den Bereich der Dosieröffnungsbereichveränderung 13 zur der Kontur der Dosieröffnung 9 der Dosierschieber 8 nicht verstellt, so dass gleichzeitig eine Ausbringmengenreduzierung erfolgt, wie dies in Fig. 14 dargestellt ist. Es ergibt sich hierdurch ein einseitig reduziertes Streubild 28. Um gleichzeitig die Wurfweite gemäß der Wurfbahn 29 weiter zu reduzieren und eine steilere Streuflanke 30 gemäß Fig. 15 als die Streuflanke 31 zu erzeugen, wird die Drehzahl der linken Schleuderscheibe 5 reduziert. Der Bordcomputer kann ebenfalls die Einstellvorrichtung der veränderbaren Antriebseinrichtung der Schleuderscheibe mit Einstelldaten beaufschlagen, so dass auch hier entsprechend eines im Bordcomputer hinterlegten Programms die Einstellung in automatischer Weise erfolgt.

### Zusammenfassend wird noch auf folgendes hingewiesen:

Wie dem Vorstehenden zu entnehmen ist, lässt sich durch den Schieber 18 die Öffnungskontur der Dosieröffnung 8 bei gleichbleibender Ausbringmenge verändern, so dass eine steilere Streuflanke der Streugutverteilung, die in Form eines Streubildes dargestellt wird, zu erzielen ist.

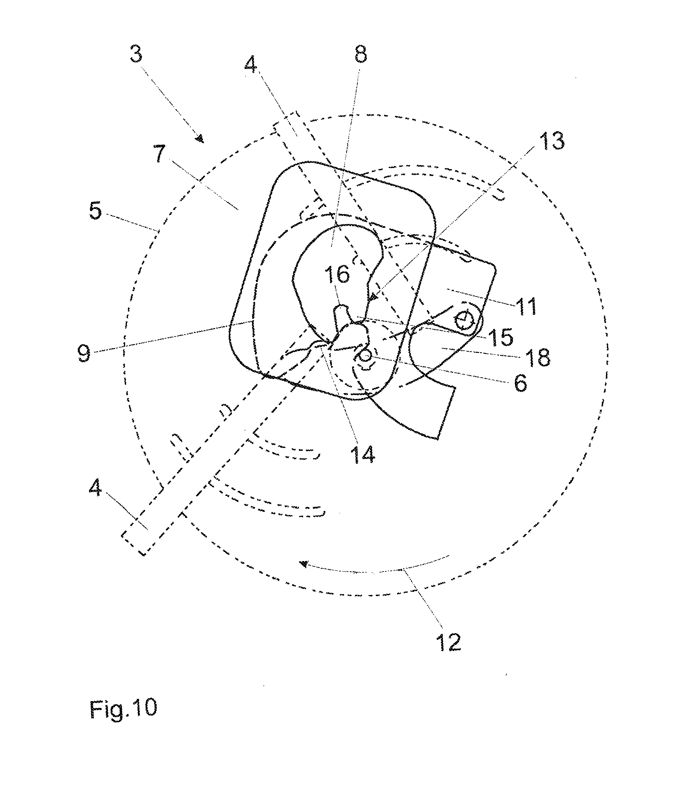

Entsprechend der Darstellung in Fig. 10 kann die Bodenplatte 7 verstellbar gegenüber dem Vorratsbehälter 1 angeordnet sein und aus der in Fig. 2 dargestellten Position in die in Fig. 10 dargestellte Position verdreht werden, so dass durch Verdrehen bzw. Verlagerung der Dosieröffnung 8 gegenüber der Schleuderscheibe 5 eine Veränderung der Streubildcharakteristik erzielbar ist, wie die Fig. 11 bis 15 zeigen. Dies kann in Verbindung mit dem Einschwenken des weiteren Schiebers 18 in die Dosieröffnung 8 zur Veränderung der Kontur der Dosieröffnung 8 kombiniert werden.

Die Veränderung der Kontur der Dosieröffnung 8 zur Streubildcharakteristikveränderung gemäß den Fig. 11 bis 15 kann mit einer Variation der Scheibendrehzahl zur Veränderung der Streubildcharakteristik genutzt werden.

Gleichzeitig kann die Veränderung der Kontur der Dosieröffnung 8 durch den weiteren Schieber 18 gleichzeitig mit einer Verstellung des Dosierschiebers 9 gekoppelt werden, um in gewünschter Weise die Ausbringmenge zu verändern oder zu verringern oder konstant zu halten.

Schließlich kann noch zusätzlich zu dem vorbeschriebenen Fällen eine Veränderung der Scheibendrehzahl erfolgen.

Im übrigen sei darauf hingewiesen, dass mit der erfindungsgemäßen Maßnahme der Dosieröffnungskontur durch den weiteren Schieber 18 die übrigen Maßnahmen zur Veränderung einer Streucharakterisitikeinstellung durch Drehzahlvariation Verlagerung der Dosieröffnung 8 gegenüber der Schleuderscheibe 5 entsprechend kombiniert werden können.

## Patentansprüche

1. Zweischeibenstreuer für Streugut mit einem Vorratsbehälter (1), der zwei sich je zu einem Boden verjüngende Trichter (2) aufweist, je einer jedem Boden zugeordneten Dosiereinrichtung (3) mit einer Dosieröffnung (8) mit einem Dosierschieber (9) zur Einstellung des gewünschten Massenstromes und je einer darunter umlaufenden Verteilerscheibe (5) mit Wurfflügeln (4), die entgegen der Fahrtrichtung des Streuers von innen nach außen umlaufen und sich nicht vollständig überlappende Streufächer durch Abschleudern der aus der Dosieröffnung (8) in einstellbaren Mengen zugeführten Materialpartikel erzeugen, wobei durch den Dosierschieber (9) der freigebbare Querschnitt der Dosieröffnung (8) in veränderbarer Weise einstellbar ist, **dadurch gekennzeichnet, dass** ein weiterer Schieber der Dosieröffnung (8) zugeordnet ist, wobei durch Verstellung des weiteren Schiebers (18) der Verlauf der Kontur der Dosieröffnung (8) veränderbar ist, und zwar derart, dass durch eine zumindest teilweise Veränderung der Kontur der Dosieröffnung (8) die Wurfweite der von den Wurfflügeln (4) abgeschleuderten Materialpartikel verringert und gleichzeitig die Querverteilung der Materialpartikel einseitig im äußeren Randbereich des Streubildes (19,23,26,28) veränderbar ist, so dass eine steilere Streuflanke (24,27,30) entsteht, dass der weitere Schieber (18) ausgehend vom Öffnungsbeginn (13) durch den Dosierschieber (9) den vom Dosierschieber (9) freigegebenen Querschnitt der Dosieröffnung (8) zunehmend verändernd und/oder abdeckend ausgebildet und/oder angeordnet ist, dass der von dem weiteren Schieber (18) veränderte und/oder verschlossene Bereich der Kontur und/oder des Querschnittes der Dosieröffnung (8) im Bereich des Öffnungsbeginns (13) der Dosieröffnung (8) und dem in Drehrichtung (12) der Wurfflügel (4) gesehen hinteren Bereich der Dosieröffnung (8) liegt, dass der Dosierschieber (9) und der weitere Schieber (18) auf einen gemeinsamen Schwenkbolzen (11) gelagert sind.

2. Zweischeibenstreuer nach Anspruch 1, **dadurch gekennzeichnet, dass** die Kontur der Dosieröffnung (8) durch den weiteren Schieber (18) mit oder ohne Änderung der Querschnittsgröße der Dosieröffnung (8) veränderbar ist.

3. Zweischeibenstreuer nach zumindest einem der vorstehenden Ansprüche, **dadurch gekennzeichnet, dass** die Verteilerscheiben (5) über zumindest eine drehzahlveränderbare Antriebseinrichtung mit veränderbaren Drehzahlen antreibbar sind.

4. Zweischeibenstreuer nach zumindest einem der vorstehenden Ansprüche, **dadurch gekennzeichnet, dass** die Dosieröffnung (8) gegenüber der Verteilerscheibe verlagerbar am Vorratsbehälter (1) angeordnet ist, wobei eine vorzugsweise motorisch ausgebildete Stellvorrichtung zur Verlagerung der Dosieröffnung (8) vorgesehen ist.

5. Zweischeibenstreuer nach zumindest einem der vorstehenden Ansprüche, **dadurch gekennzeichnet, dass** der weitere Dosierschieber (18) mittels eines vorzugsweise motorisch ausgebildeten Stellelementes verstellbar ist, dass die drehzahlveränderbare Antriebseinrichtung mittels eines motorischen Stellelementes zur Drehzahlveränderung einstellbar ist, dass ein Bordcomputer vorgesehen ist, dass über den Bordcomputer die Stellvorrichtungen der veränderbaren Antriebseinrichtung, zur Verlagerung der Dosieröffnung (8) und/oder des weiteren Schiebers (18) mit Einstelldaten beaufschlagbar sind und dass die Einstellungen des weiteren Schiebers (18) von der Antriebseinrichtung entsprechend eines im Bordcomputer hinterlegten Programms erfolgt.

## Claims

1. Two-disc caster for granular material, with a storage container (1) which has two funnels (2) tapering to one base each, one metering device (3) assigned to each base and having a metering opening (8) with a metering slide (9) for adjusting the desired mass flow, and a distributor disc (5) revolving under each metering device and having throwing blades (4) which revolve from the inside outwards counter to the direction of travel of the caster and produce casting fans which do not completely overlap, by throwing of the material particles supplied in adjustable quantities from the metering opening (8), wherein the releasable cross section of the metering opening (8) is variably adjustable by the metering slide (9), **characterized in that** a further slide is assigned to the metering opening (8), wherein, by adjustment of the further slide (18), the profile of the contour of the metering opening (8) can be varied, to be precise in such a manner that, by means of an at least partial varying of the contour of the metering opening (8), the throwing width of the material particles thrown off by the throwing blades (4) is reduced and at the same time the transverse distribution of the material particles can be varied on one side in the outer border region of the distribution pattern (19, 23, 26, 28), thus giving rise to a steeper casting edge (24, 27, 30), **in that** the further slide (18), starting from the opening beginning (13) by the metering slide (9), is designed and/or arranged to increasingly vary and/or cover the cross section of the metering opening (8) that is released by the metering slide (9), **in that** that region of the contour and/or of the cross section of the metering opening (8) which is varied and/or closed by the further slide (18) is located in the region of the opening beginning (13) of the metering opening (8) and the rear region of the metering opening (8), as seen in the direction of rotation (12) of the throwing blades (4), and **in that** the metering slide (9) and the further slide (18) are mounted on a common pivot pin (11).

2. Two-disc caster according to Claim 1, **characterized in that** the contour of the metering opening (8) can be varied by the further slide (18) with or without changing the cross-sectional size of the metering opening (8).

3. Two-disc caster according to at least either of the preceding claims, **characterized in that** the distributor discs (5) are drivable at variable speeds via at least one speed-variable driving device.

4. Two-disc caster according to at least one of the preceding claims, **characterized in that** the metering opening (8) is arranged on the storage container (1) so as to be displaceable in relation to the distributor disc, wherein a regulating device, which is preferably of motorized design, is provided for displacing the metering opening (8).

5. Two-disc caster according to at least one of the preceding claims, **characterized in that** the further metering slide (18) is adjustable by means of a regulating element, which is preferably of motorized design, **in that** the speed-variable driving device is adjustable by means of a motorized regulating element for varying the speed, **in that** an on-board computer is provided, **in that** the regulating devices of the variable driving device can be charged with adjustment data via the on-board computer in order to displace the metering opening (8) and/or the further slide (18), and **in that** the further slide (18) is adjusted by the driving device in accordance with a program stored in the on-board computer.

## Revendications

1. Épandeur double disque pour un produit d'épandage, comprenant un réservoir de stockage (1) qui comprend deux entonnoirs (2) se rétrécissant chacun en direction d'un fond, un dispositif de dosage respectif (3), associé à chaque fond, comprenant un orifice de dosage (8) et un tiroir doseur (9) pour le réglage du débit massique souhaité, et un disque distributeur respectif (5) tournant en dessous de ce dispositif de dosage et pourvu d'ailettes d'éjection (4) qui tournent de l'intérieur vers l'extérieur, en sens inverse à la direction d'avancement de l'épandeur, et produisent des zones d'épandage ne se chevauchant pas complètement par centrifugation des particules de matériau acheminées hors de l'orifice de dosage (8) en des quantités réglables, la section transversale de l'orifice de dosage (8) qui peut être dégagée pouvant être réglée de manière modifiable au moyen du tiroir doseur (9), **caractérisé en ce qu'**un tiroir supplémentaire est associé à l'orifice de dosage (8), l'allure du contour de l'orifice de dosage (8) étant modifiable par déplacement du tiroir supplémentaire (18), et ce de telle sorte que, par une modification au moins partielle du contour de l'orifice de dosage (8), la portée d'éjection des particules de matériau centrifugées par les ailettes d'éjection (4) soit réduite et qu'en même temps la distribution transversale des particules de matériau soit modifiable d'un côté dans la région de bord extérieure du profil d'épandage (19, 23, 26, 28), de sorte qu'un flanc d'épandage plus raide (24, 27, 30) soit produit, **en ce que** le tiroir supplémentaire (18) est réalisé et/ou disposé de manière à modifier en l'accroissant et/ou de manière à recouvrir au moyen du tiroir doseur (9) la section transversale de l'orifice de dosage (8) dégagée par le tiroir doseur (9) à partir du commencement de l'orifice (13), **en ce que** la région du contour et/ou de la section transversale de l'orifice de dosage (8) qui est modifiée et/ou fermée par le tiroir supplémentaire (18) se situe dans la région du commencement de l'orifice (13) de l'orifice de dosage (8) et dans la région arrière de l'orifice de dosage (8) considérée dans le sens de rotation (12) des ailettes d'éjection (4), et **en ce que** le tiroir doseur (9) et le tiroir supplémentaire (18) sont montés sur un axe de pivotement commun (11).

2. Épandeur double disque selon la revendication 1, **caractérisé en ce que** le contour de l'orifice de dosage (8) est modifiable au moyen du tiroir supplémentaire (18), avec ou sans modification de la taille de la section transversale de l'orifice de dosage (8).

3. Épandeur double disque selon au moins l'une quelconque des revendications précédentes, **caractérisé en ce que** les disques distributeurs (5) peuvent être entraînés à des vitesses de rotation modifiables par le biais d'au moins un dispositif d'entraînement dont la vitesse de rotation est modifiable.

4. Épandeur double disque selon au moins l'une quelconque des revendications précédentes, **caractérisé en ce que** l'orifice de dosage (8) est disposé sur le réservoir de stockage (1) de manière à pouvoir être décalé par rapport au disque distributeur, un dispositif de réglage réalisé de préférence de manière à comporter un moteur étant prévu pour le décalage de l'orifice de dosage (8).

5. Épandeur double disque selon au moins l'une quelconque des revendications précédentes, **caractérisé en ce que** le tiroir doseur supplémentaire (18) peut être ajusté au moyen d'un élément de réglage réalisé de préférence de manière à comporter un moteur, **en ce que** le dispositif d'entraînement dont la vitesse de rotation est modifiable peut être réglé au moyen d'un élément de réglage motorisé pour la modification de la vitesse de rotation, **en ce qu'**un ordinateur de bord est prévu, **en ce que**, par le biais de l'ordinateur de bord, les dispositifs de réglage du dispositif d'entraînement modifiable reçoivent des données de réglage en vue du décalage de l'orifice de dosage (8) et/ou du tiroir supplémentaire (18), et **en ce que** les réglages du tiroir supplémentaire (18) par le dispositif d'entraînement s'effectuent conformément à un programme mis en mémoire dans l'ordinateur de bord.
